# FASCICULE DE BREVET EUROPEEN

(11) **EP 1 092 625 B1**
(45) Date de publication et mention de la délivrance du brevet: **30.07.2003**
(21) Numéro de dépôt: 00402818.9
(22) Date de dépôt: 12.10.2000
(51) Int. Cl.: B64D 17/38

(54) **Mécanisme de connexion entre une charge et un parachute**
Verbindungsvorrichtung zwischen einem Fallschirm und seiner Last
Connecting mechanism between a parachute and its load

(30) Priorité: 15.10.1999 FR 9912883
(43) Date de publication de la demande: 18.04.2001
(73) Titulaire: Aerospatiale Matra Missiles, 75781 Paris Cedex 16 (FR)
(72) Inventeur: Vergne, Jean-Pierre, 18230 Saint-Doulchard (FR)
(74) Mandataire: Ilgart, Jean-Christophe

(56) Documents cités:
- FR-A- 2 244 668
- GB-A- 2 027 113

## Description

Cette invention s'applique à la connexion entre une charge et un parachute et comprend plus précisément un mécanisme capable de favoriser le déventement du parachute quand la charge a touché terre.

Le déventement d'un parachute désigne son affaissement quand il cesse de soutenir le poids de la charge arrivée au sol. Le parachute se replie peu à peu en s'inclinant dans le sens du vent et finit par reposer inerte sur le sol ; il est cependant capable d'entraîner la charge pendant plusieurs mètres sur le sol pendant ces moments, et de l'endommager. C'est pourquoi, bien que la charge soit munie de ballons de protection ou d'autres moyens amortissants, on vient interposer un mécanisme de connexion entre la charge et le parachute, qui s'ouvre dès que la charge a touché terre pour la disjoindre du parachute. FR-A-2 244 668 décrit un tel mécanisme de connexion.

L'invention a précisément trait à l'un de ces mécanismes de connexion utilisés pendant le déventement du parachute ; son intérêt par rapport à d'autres mécanismes est qu'il est presque entièrement récupérable et utilisable pour un autre parachutage tout en étant simple, robuste et fiable.

Sous sa forme plus générale, ce mécanisme comprend un premier flasque, au moins une colonne de guidage fixée au premier flasque, un second flasque coulissant sur la colonne de guidage, un axe muni de deux extrémités jouant dans des trous des flasques respectifs dans un état de fermeture du mécanisme, un frein disposé entre la colonne de guidage et le second flasque et retenant le second flasque contre des mouvements d'écartement du premier flasque, une butée disposée sur la colonne de guidage et dirigée vers une face du second flasque opposée au premier flasque, et un système commandé à distance pour écarter les flasques en rompant le frein, l'axe étant plus court qu'une distance entre les flasques quand le second flasque a heurté la butée.

Le système pour écarter peut être pyrotechnique ; il est avantageusement placé entre la colonne mentionnée ci-dessus et une seconde colonne parallèle à la première, également fixée au premier flasque et sur laquelle le second flasque coulisse.

La colonne peut être une simple vis dont la partie non filetée de la tige sert à faire coulisser le second flasque et dont la tête sert de butée ; par ailleurs, le frein peut être constitué par une rondelle disposée contre la butée en position de fermeture du mécanisme.

On va maintenant décrire une réalisation particulière de l'invention plus en détail à l'aide des figures suivantes :

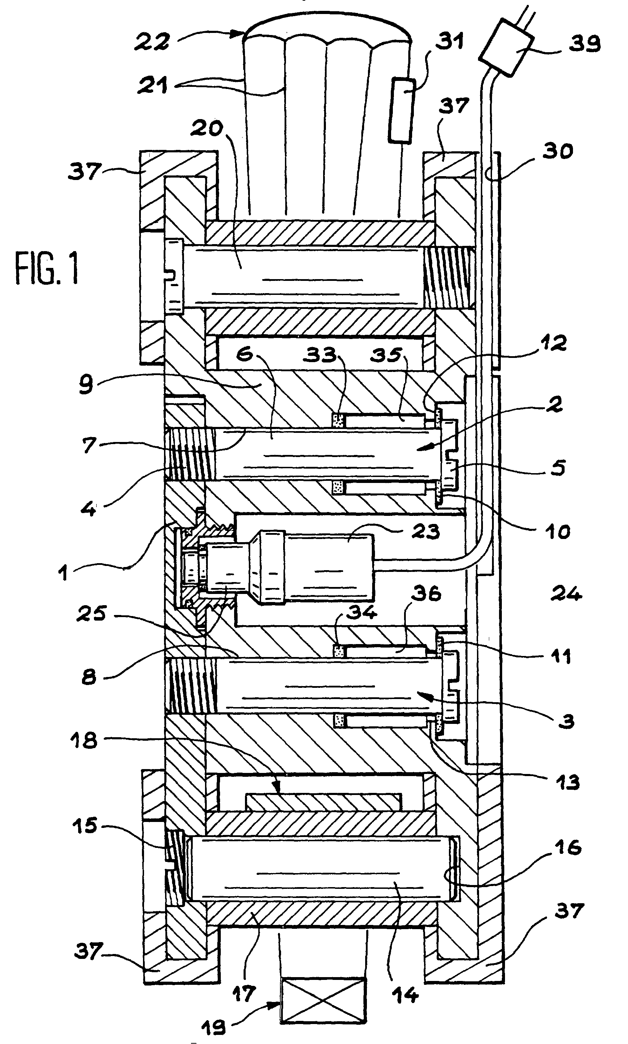

- la figure 1 illustre cette réalisation en coupe médiane,

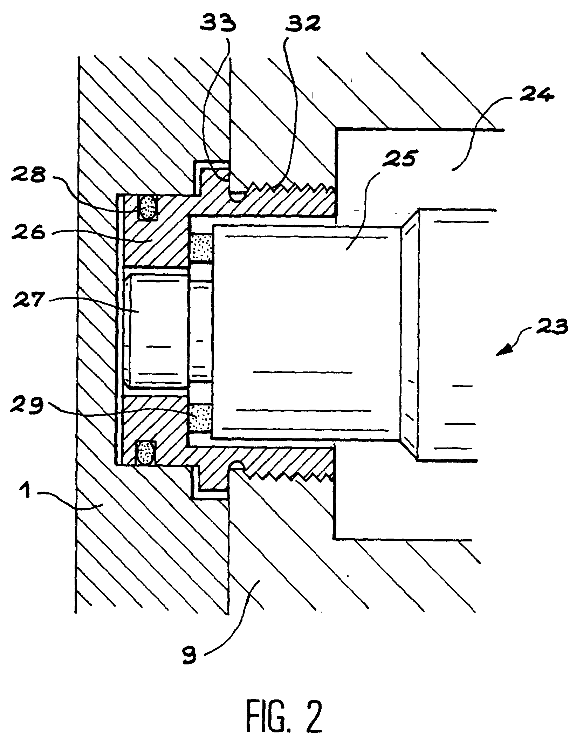

- et la figure 2 représente les parages du système déclenchant l'ouverture du dispositif.

Le mécanisme comprend un premier flasque 1 dans lequel sont engagées les portions filetées de deux vis 2 et 3 formant autant de colonnes de guidage parallèles ; les vis 2 et 3 comprennent entre leurs portions filetées 4 et leurs têtes 5 des portions lisses 6 coulissant dans des évidements, respectivement 7 et 8, d'un second flasque 9, plus épais, qui pourrait ainsi s'écarter du premier flasque 1. Des rondelles 10 et 11, engagées entre--les têtes 5 et des épaulements 12 et 13 du second flasque 9, sur une face opposée au premier flasque 1 interdisent pourtant ce mouvement d'écartement des flasques 1 et 9 dans un état de fermeture du mécanisme.

Un axe 14 garde alors ses extrémités engagées dans des trous respectifs 15 et 16 des flasques 1 et 9 ; ces extrémités jouent dans les trous 15 et 16, sans que l'axe 14 ait toutefois liberté de les quitter et de se détacher du mécanisme, car il est solidaire d'un fourreau 17 plus court qui l'entoure et qui bute contre les flasques 1 et 9 avant que les extrémités de l'axe 14 n'aient pu sortir de l'un ou l'autre des trous 15 et 16. Le fourreau 17 n'est toutefois pas indispensable, et on pourrait envisager d'utiliser l'axe 14 nu, d'une longueur suffisante pour ne pas pouvoir sortir de chacun des trous 15 et 16 non traversants même en butant au fond de l'autre.

Des sangles 18 de liaison à une charge 19 sont engagées autour de l'axe 14. Enfin, l'autre extrémité du second flasque 9 comprend une anse 20 autour de laquelle sont engagées les suspentes 21 d'un parachute 22.

Un élément essentiel de l'invention est un dispositif permettant d'ouvrir le mécanisme. Il s'agit d'un système pyrotechnique 23 disposé dans un logement 24 du second flasque 9, entre les vis 4, et qui comprend un embout fileté 25 engagé dans un support 26 au fond du logement 24. Le support 26 est percé de manière qu'une cartouche 27 du dispositif pyrotechnique donne devant le premier flasque 1. L'étanchéité du logement dans lequel se trouve la cartouche 27 est réalisée par un joint d'étanchéité 28 entre le support 26 et le premier flasque 1 et par un second joint 29 entre le support 26 et l'embout 25. Le dispositif pyrotechnique 23 est commandé par un système électrique 39 auquel il est lié par un fil 30 ; le système électrique 39 commande l'explosion de la- cartouche 27 dès qu'il détecte que la charge 21 a touché terre, ce qu'il peut faire en mesurant le relâchement d'un extensomètre 31 disposé sur une des suspentes 21.

L'explosion de la cartouche 27 entraîne une force importante sur le premier flasque 1, qui s'exerce sur sa face qui donne sur la cartouche 27, et une force de réaction dirigée vers la droite sur l'embout 25, le support 26 et le second flasque 9 puisque le support 26 est relié au second flasque 9 par un filetage 32 et bute encore contre lui par un épaulement 33. L'effort d'écartement des flasques 1 et 9 qui est ainsi produit s'exerce aussi entre les épaulements 12 et 13 et les têtes 5 des vis 4, et il est suffisant pour rompre les rondelles 10 et 11 par cisaillement : les flasques 1 et 9 sont alors libres de s'écarter, les tiges 6 de vis coulissant dans les évidements 7 et 8 du second flasque 9 jusqu'à ce que les têtes 5 butent contre des garnitures amortissantes 33 et 34 situées au fond d'élargissements 35 et 36 des évidements 7 et 8, dans lesquels les têtes se sont enfoncées. Les flasques 1 et 9 se sont alors suffisamment écartés pour que l'axe 14 soit désormais plus court que leur distance ; il se détache alors du reste du mécanisme, ce qui disjoint la charge 19 du parachute 22, qui se dévente alors librement sans entraîner la_charge 19 derrière lui.

Il est conseillé d'enrober les bouts des flasques 1 et 9 dans des coquilles amortissantes 37 afin d'atténuer les chocs quand ils sont traînés au sol.

Presque tout le mécanisme pourra être réutilisé quand il aura- été récupéré : il suffira de remplacer l'élément pyrotechnique 23, les rondelles 10 et 11, et éventuellement les joints 28, 29, 33 et 34 ainsi que l'axe 14, qui pourront avoir été endommagés par le choc ou la chaleur, ou perdus. L'axe 14 pourra cependant être conçu avec une anse qui lui permettra de rester accrocher à la sangle 18.

## Revendications

1. Mécanisme de connexion entre une charge (19) et un parachute (22), comprenant un premier flasque (1), au moins une colonne de guidage (2, 3) fixée au premier flasque, un second flasque (9) coulissant sur la colonne de guidage, un axe (14) muni de deux extrémités jouant dans des trous (15, 16) des flasques respectifs (1, 9) dans un état de fermeture du mécanisme, un frein (10, 11) disposé entre la colonne de guidage et le second flasque et retenant le second flasque (9) contre des mouvements d'écartement du premier flasque (1), une butée (5) disposée sur la colonne de guidage-et dirigée vers une face du second flasque opposée au premier flasque, et un système (23) commandé à distance pour écarter les flasques en rompant le frein, l'axe (14) étant plus court qu'une distance entre les flasques (1, 9) quand le second flasque a heurté la butée.

2. Mécanisme de connexion entre une charge et un parachute selon la revendication 1, **caractérisé en ce que** le système pour écarter les flasques est pyrotechnique.

3. Mécanisme de connexion entre une charge et un parachute selon l'une quelconque des revendications 1 ou 2, **caractérisé en ce qu'**il comprend une seconde colonne fixée au premier flasque et sur laquelle le second flasque coulisse, le système (23) pour écarter les flasques étant placé entre les colonnes.

4. Mécanisme de connexion entre une charge et un parachute selon l'une quelconque des revendications 1 à 3, **caractérisé en ce que** la colonne, et éventuellement la seconde colonne, est une vis (4) engagée dans le premier flasque, ayant une tête (5) qui forme la butée.

5. Mécanisme de connexion entre une charge et un parachute selon l'une quelconque des revendications 1 à 4, **caractérisé en ce que** le frein (10, 11) est une rondelle.

6. Mécanisme de connexion entre une charge et un parachute selon la revendication 5, **caractérisé en ce que** la rondelle (10, 11) est disposée contre la butée (5), et le second flasque (9) est muni d'un élargissement de perçage- où la-butée coulisse jusqu'à un fond de l'élargissement.

7. Mécanisme de connexion entre une charge et un parachute selon la revendication 6, **caractérisé en ce que** le fond de l'élargissement est occupé par une garniture amortissante (33, 34).

8. Mécanisme de connexion entre une charge et un parachute selon l'une quelconque des revendications 1 à 7, **caractérisé en ce qu'**un des flasques comprend une anse (20) d'accrochage.

9. Mécanisme de connexion entre une charge et un parachute selon l'une quelconque des revendications 1 à 8, **caractérisé en ce que** les flasques sont enrobés aux bouts par des coquilles amortissantes (37).

## Patentansprüche

1. Verbindungsvorrichtung zwischen einer Last (19) und einem Fallschirm (22), mit einem ersten Flansch (1), mindestens einem am ersten Flansch befestigten Führungsbolzen (2,3), einem auf dem Führungsbolzen gleitenden zweiten Flansch (9), einer mit zwei in Löchern (15,16) der jeweiligen Flansche (1,9) in einem Schließzustand des Vorrichtung mit Spiel angeordneten zwei Enden, einer zwischen dem Führungsbolzen und dem zweiten Flansch angeordneten Bremse (10,11), welche den zweiten Flansch (9) gegen Entfernungsbewegungen des ersten Flansches (1) zurückhält, einem an dem Führungsbolzen angeordneten und auf eine Fläche des zweiten Flanschs gegenüber dem ersten Flansch gerichteten Anschlag (5), und einem fernbetätigten. System (23) zum Auseinanderbringen der Flansche durch Brechen der Bremse, wobei die Achse (14) kürzer ist als ein Abstand zwischen den Flanschen (1, 9), wenn der zweite Flansch an dem Anschlag angestoßen ist.

2. Verbindungsvorrichtung zwischen einer Last und einem Fallschirm nach Anspruch 1, **dadurch gekennzeichnet, dass** das System zum Auseinanderbringen der Flansche pyrotechnisch ist.

3. Verbindungsvorrichtung zwischen einer Last und einem Fallschirm nach einem der Ansprüche 1 oder 2, **dadurch gekennzeichnet, dass** er einen am ersten Flansch befestigten zweiten Bolzen umfasst, auf dem der zweite Flansch gleitet, wobei das System (23) zum Auseinanderbringen der Flansche zwischen den Bolzen angeordnet ist.

4. Verbindungsvorrichtung zwischen einer Last und einem Fallschirm nach einem der Ansprüche 1 bis 3, **dadurch gekennzeichnet, dass** die Bolzen und eventuell der zweite Bolzen eine mit dem ersten Flansch in Eingriff stehende Schraube (4) mit einem den Anschlag bildenden Kopf (5) ist.

5. Verbindungsvorrichtung zwischen einer Last und einem Fallschirm nach einem der Ansprüche 1 bis 4, **dadurch gekennzeichnet, dass** die Bremse (10,11) eine Scheibe ist.

6. Verbindungsvorrichtung zwischen einer Last und einem Fallschirm nach Anspruch 5, **dadurch gekennzeichnet, dass** die Scheibe (10,11) gegen den Anschlag (5) angeordnet ist und der zweite Flansch (9) mit einer Bohrungsverbreiterung versehen ist, an der der Anschlag bis zu einem Boden der Verbreiterung gleitet.

7. Verbindungsvorrichtung zwischen einer Last und einem Fallschirm nach Anspruch 6, **dadurch gekennzeichnet, dass** an dem Boden der Verbreiterung ein dämpfender Belag (33/34) angebracht ist.

8. Verbindungsvorrichtung zwischen einer Last und einem Fallschirm nach einem der Ansprüche 1 bis 7, **dadurch gekennzeichnet, dass** einer der Flansche einen Haltegriff (20) aufweist.

9. Verbindungsvorrichtung zwischen einer Last und einem Fallschirm nach einem der Ansprüche 1 bis 8, **dadurch gekennzeichnet, dass** die Flansche an den Enden durch Dämpfungsummantelungen (37) verkleidet sind.

## Claims

1. Connecting mechanism between a load (19) and a parachute (22), comprising a first flange (1), at least one guide pillar (2, 3) fixed to the first flange, a second flange (9) sliding on the guide pillar, an axle (14) provided with two ends running in holes (15, 16) of the respective flanges (1, 9) when the mechanism is closed, a brake (10, 11) arranged between the guide pillar and the second flange and which holds the second flange (9) against opening movements of the first flange (1), a stop (5) arranged on the guide pillar and directed towards a face of the second flange, opposite the first flange, and a remote control system (23) for opening the flanges while interrupting braking, the axle (14) being shorter than the distance between the flanges (1, 9) when the second flange has hit the stop.

2. Connecting mechanism between a load and a parachute according to claim 1, **characterised in that** the system for opening the flanges is pyrotechnic.

3. Connecting mechanism between a load and a parachute according to claim 1 or 2, **characterised in that** it comprises a second column fixed to the first flange and on which the second flange slides, the flange opening system (23) being placed between the columns.

4. Connecting mechanism between a load and a parachute according to any of claims 1 to 3, **characterised in that** the column, and possibly the second column, is a screw (4) engaged in the first flange, and its head (5) forms the stop.

5. Connecting mechanism between a load and a parachute according to any of claims 1 to 4, **characterised in that** the brake (10, 11) is a washer.

6. Connecting mechanism between a load and a parachute according to claim 5, **characterised in that** the washer (10, 11) is arranged against the stop (5) and the second flange (9) is provided with an enlarged bore and stop slides up to the base of the enlargement.

7. Connecting mechanism between a load and a parachute according to claim 6, **characterised in that** the base of the enlargement is occupied by a damping trim (33, 34).

8. Connecting mechanism between a load and a parachute according to any of claims 1 to 7, **characterised in that** one of the flanges comprises a hook-up handle (20).

9. Connecting mechanism between a load and a parachute according to any of claims 1 to 8, **characterised in that** the ends of the flanges are encased in damping shells (37).
